# EUROPÄISCHE PATENTANMELDUNG

(11) **EP 1 346 788 A2**
(43) Veröffentlichungstag der Anmeldung: **24.09.2003**
(21) Anmeldenummer: 03006359.8
(22) Anmeldetag: 20.03.2003
(51) Int. Cl.: B23B 39/16, B23B 39/22, B23Q 39/02, B23Q 1/01

(54) **Bearbeitungszentrum**

(30) Priorität: 22.03.2002 DE 10213056; 27.01.2003 DE 10302985
(71) Anmelder: GROB-Werke Burkhart Grob e.K., 87719 Mindelheim (DE)
(72) Erfinder: Lutz, Heinrich, 87742 Dirlewang (DE)
(74) Vertreter: Pfister, Stefan Helmut Ulrich

(57) **Zusammenfassung**

Die Erfindung betrifft ein Bearbeitungszentrum. Das Werkstück wird von einer mindestens entlang einer Richtung verfahrbaren Spannvorrichtung gehalten. Eine mindestens entlang einer Richtung verfahrbare Bearbeitungseinheit weist mindestens drei je ein Werkzeug antreibende Werkzeugspindeln auf. Für eine Positionierung des Werkzeuges bezüglich des Werkstückes beziehungsweise für deren Bearbeitung dient die Bewegung der Spannvorrichtung und/oder die Bewegung der Bearbeitungseinheit.

## Beschreibung

Die Erfindung betrifft ein Bearbeitungszentrum für die insbesondere spanabhebende Bearbeitung mindestens eines Werkstückes.

Vorgenannte Bearbeitungszentren sind bekannt. Insbesondere sind sogenannte Vielspindlermaschinen bekannt, bei welchen eine Vielzahl von Spindeln ortsfest positioniert ist und das Werkstück auf einer Spannvorrichtung gehalten ist und entlang der drei Raumachsen und gegebenenfalls auch mehreren Drehachsen an die Werkzeugspindeln positioniert und während der Bearbeitung auch bewegbar ist.

Nachteilig bei diesen Lösungen des Standes der Technik ist, daß der konstruktive Aufwand für den hohen Grad der Beweglichkeit der Spannvorrichtung enorm ist.

Des weiteren sind Bearbeitungszentren bekannt, die sich aufgrund ihrer hohen Flexibilität auszeichnen, die insbesondere daher rührt, daß auf die Werkzeugspindeln aus einem Werkzeugmagazin eine Vielzahl von Bearbeitungswerkzeuge einwechselbar ist. Der Wechselvorgang geht natürlich zu Lasten der Bearbeitungszeit, da bei Bearbeitungszentren mit einer geringen Anzahl von Spindeln der Wechselvorgang eine spanabhebende Bearbeitung blockiert. Gleichzeitig wird durch den Werkzeugwechsel riskiert, daß sich ein Span in der Werkzeugaufnahme verfängt und so zu Maßungenauigkeiten oder Fehlbearbeitungen führen kann.

Die vorliegende Erfindung hat es sich zur Aufgabe gemacht, ein Bearbeitungszentrum zu entwickeln, das zum einen eine möglichst hohe Zerspanleistung erreicht und zum anderen in seinem konstruktiven Aufbau möglichst einfach ausgestaltet ist.

Zur Lösung dieser Aufgabe geht die Erfindung aus von einem zuvor beschriebenen Bearbeitungszentrum, wobei ein Bearbeitungszentrum für die insbesondere spanabhebende Bearbeitung mindestens eines Werkstückes vorgeschlagen wird, wobei das mindestens eine Werkstück von einer mindestens entlang einer Richtung verfahrbaren Spannvorrichtung gehalten ist und eine mindestens entlang einer Richtung verfahrbare Bearbeitungseinheit mindestens drei je ein Werkzeug antreibende Werkzeugspindeln trägt und die für eine Positionierung oder die Bearbeitung notwendige Relativbewegung oder für die Bearbeitung und Positionierung notwendige Relativbewegung von Werkzeug und Werkstück sowohl durch die Bewegung der Spannvorrichtung als auch durch die Bewegung der Bearbeitungseinheit, beide der Bewegungen gleichzeitig oder jeweils nur eine der Bewegungen erfolgt. Alternativ wird die Erfindung durch ein Bearbeitungszentrum beschrieben, wobei das Werkstück oder die Werkstücke von einer, mindestens entlang einer Richtung verfahrbaren Spannvorrichtung gehalten ist und mindestens eine mindestens entlang einer Richtung verfahrbare Bearbeitungseinheit mindestens drei, je ein Werkzeug antreibende Werkzeugspindeln trägt und die für eine Positionierung des Werkzeugs beziehungsweise des Werkstückes vorgesehene Relativbewegung von Werkzeug und Werkstück und/oder die Relativbewegung von Werkzeug und Werkstück während der Bearbeitung durch die Bewegung der Spannvorrichtung und/oder der Bearbeitungseinheit erfolgt.

Die Erfindung schlägt zum einen eine Aufgliederung der notwendigen Bewegung zum Positionieren beziehungsweise zur Bearbeitung einerseits auf die Bewegung der Spannvorrichtung, andererseits auf die Bewegung der Bearbeitungseinheit vor. Durch diese Aufteilung wird der hohe Aufwand für eine Positionierung der Spannvorrichtung im Raum, wie es der Stand der Technik kennt, vermieden, was letztendlich zu kleineren Bearbeitungszentren führt, da der konstruktive Aufwand für die hintereinander geschachtelten, in der Regel orthogonal zueinander angeordneten Bewegungsachsen entfällt oder deutlich reduziert wird. Hieraus resultieren geringere Massen, die zu bewegen sind, die zu kleineren Antrieben bei gleichbleibender Beschleunigung führen.

Durch eine möglichst hohe Anzahl von Spindeln, insbesondere von drei oder mehr Spindeln auf einer Bearbeitungseinheit, erreicht die Erfindung darüber hinaus, daß bereits fertig montierte, einsetzbare Werkzeuge in unmittelbarer Nähe des Werkstückes zur Verfügung stehen, die sofort zum Einsatz gebracht werden können, ohne daß ein Werkzeugwechsel notwendig ist. Dabei ist die Anordnung auf einer Bearbeitungseinheit von Vorteil, da die jeweiligen Antriebe für die verschiedenen Werkzeugspindeln sinnvollerweise durch den gemeinsamen Antrieb der Bearbeitungseinheit zusammengefaßt werden kann.

Die Erfindung bietet den Vorteil, daß sehr hohe Zerspanleistungen erreicht werden, da keine Zeit mehr für einen Werkzeugwechsel benötigt wird beziehungsweise es muß während der Bearbeitung nicht auf den Werkzeugwechsel gewartet werden. Dieser könnte theoretisch auch parallel zur Bearbeitung erfolgen, indem zum Beispiel die nicht benötigte Bearbeitungseinheit von dem Werkstück weggeführt wird und das Werkstück in einem gewissen Abstand zur spanerzeugenden Bearbeitung gewechselt wird, um das Risiko eines eingeklemmten Spanes in der Werkzeugaufnahme auszuschließen.

Die Verteilung der verschiedenen Bewegungsachsen zum einen auf die Spannvorrichtung und zum anderen auf die Bearbeitungseinheit führt aber auch zu einer sehr einfachen mechanischen Bauweise, die auch zu einer einfachen Ansteuerung und Bedienung führt. Ist die Bauweise verhältnismäßig einfach, resultiert hieraus auch eine einfache günstige Transportweise der Maschine.

Der Einsatz von mehreren Spindeln erlaubt auch eine entsprechende Optimierung der Spindeln auf die jeweilige Bearbeitungsaufgabe, was letztendlich zu längeren Lebensdauern der Spindeln führt, da diese zum einen nur kurzfristig im Einsatz sind und insgesamt eine längere Standzeit aufweisen werden und andererseits jeweils auf die Einsatzaufgabe abgestimmt werden können.

In einer Variante der Erfindung ist vorgesehen, daß das Bearbeitungszentrum eine oder mehrere Bearbeitungseinheiten aufweist.

In einem ersten Schritt ist es für den Anwender möglich, ein Bearbeitungszentrum nur mit einer Bearbeitungseinheit ausgestattet zu verwenden, wenn zum Beispiel die auf dem Bearbeitungszentrum durchzuführende Bearbeitung eine hohe Anzahl von Arbeitsspindeln noch nicht benötigt. Es ist aber durch den prinzipiellen modularen Aufbau des erfindungsgemäßen Bearbeitungszentrums möglich, an einem Bearbeitungszentrum, welches zunächst nur mit einer Bearbeitungseinheit ausgestattet ist, eine zweite oder weitere Bearbeitungseinheiten zu integrieren, wobei das Basismodul bereits die steuerungstechnischen Voraussetzungen vorsieht. Dies erlaubt eine optimale Anpassung des Bearbeitungszentrums an jetzige, aber auch an zukünftige Bearbeitungsaufgaben mit geringem Änderungs- beziehungsweise Rüstaufwand für diese neuen Aufgaben.

Günstig ist es, wenn das beziehungsweise die Werkstücke zumindest gleichzeitig von zwei Seiten und/oder an zwei Stellen bearbeitet wird/werden. Um eine hohe Zerspanleistung zu erreichen, schlägt die Erfindung vor, daß möglichst viele Spindeln des Bearbeitungszentrums in Bearbeitung stehen. Soweit es aufgrund der Ausgestaltung des Werkstückes gelingt, sind möglichst symmetrische oder parallele Vorgänge bevorzugt vorzunehmen, da dadurch eine hohe Zerspanleistung durch parallel ablaufende Zerspanungen möglich ist. Dabei erlaubt die Erfindung sowohl eine Bearbeitung des oder der Werkstücke jeweils von der gleichen Seite (bei entsprechender Anordnung) oder eine Bearbeitung von zwei Seiten in Opposition, wobei die Steuerung entsprechend vorsieht, daß die Bearbeitungsschritte einander nicht kollidieren oder stören.

Die Erfindung schlägt insbesondere vor, daß die zwischen der Bearbeitungseinheit und der Spannvorrichtung verteilten verschiedenen Bewegungen eine relative Positionierung beziehungsweise Bewegung des Werkstückes und/oder des Werkzeuges entlang der drei Raumachsen erlauben. Letztendlich ist eine Relativbewegung von Werkstück und Werkzeug zum einen zur Positionierung und zum anderen während der Bearbeitung wichtig. Die Erfindung schlägt insbesondere vor, daß die Bewegungen zwischen der Bearbeitungseinheit und der Spannvorrichtung verteilt werden, wodurch der jeweilige Aufwand verringert wird und trotzdem eine gleichhohe Flexibilität verbleibt. Es ist auch möglich, durch eine entsprechende Überlagerung der bevorzugt orthogonal zueinander angeordneten einzelnen Raumachsen der verschiedenen Bewegungen auch schräge Bearbeitungen durchzuführen.

In einer bevorzugten Ausgestaltung der Erfindung ist vorgesehen, daß die Bearbeitungseinheit oder das gesamte Bearbeitungszentrum eine Anzahl von Spindeln besitzt, die mindestens der Anzahl der einzusetzenden Werkzeuge für die Bearbeitung des Werkstückes entspricht. Durch eine solche reichhaltige Ausstattung der Bearbeitungseinheit beziehungsweise des Bearbeitungszentrums mit einer großen Anzahl von Spindeln wird erreicht, daß ein Werkzeugwechsel während der Bearbeitung entfällt. Zwischen zwei Bearbeitungsschritten ist daher nur eine neue Positionierung des jeweils gewünschten Werkzeuges an dem Werkstück vorzunehmen, der sonst aufwendige bekannte Werkzeugwechsel entfällt. Hieraus resultiert zum einen eine sehr hohe Zerspanleistung, da die Werkzeugwechselzeit entfällt und zum anderen wird hierdurch auch sichergestellt, daß mit einer solchen erfindungsgemäßen Ausgestaltung des Bearbeitungszentrums auch eine hohe Genauigkeit garantiert werden kann, da durch den fehlenden Werkzeugwechsel auch keine Gefahr eines eingeklemmten Spanes in der Werkzeugaufnahme besteht, der gegebenenfalls zu Ausschuß durch Fehlbearbeitung führen könnte.

In einer bevorzugten Ausgestaltung der Erfindung ist vorgesehen, daß die Bearbeitungseinheit längs- und/oder querbeweglich ausgebildet ist.

In Abhängigkeit der Anzahl der Werkstücke sowie der durchzuführenden Bearbeitungsschritte kann es gemäß der Erfindung günstig sein, die Bearbeitungseinheit nur entlang einer Dimension beweglich auszugestalten. Zum Beispiel wird in einem ersten Schritt das Werkstück bezüglich einer ersten Bearbeitungseinheit positioniert, wobei dann die Bearbeitungseinheit eine Längsbewegung (parallel zur Rotationsachse der Spindel) ausführt, um den Bearbeitungsschritt auszuführen. Gleichzeitig ist in diesem Fall zum Beispiel vorgesehen, daß auf der gegenüberliegenden Werkstückseite eine zweite Bearbeitungseinheit vorgesehen ist, die ihrerseits querbeweglich auf einem Quertisch positioniert wird (parallel zur Positionierrichtung der Spannvorrichtung), um die Spindel in die richtige Position zu bringen und dann ihrerseits durch eine Längsbewegung den Bearbeitungsschritt gleichzeitig ausführt.

In diesem Ausführungsbeispiel wird also die erste Bearbeitungseinheit nur bezüglich einer Achse, nämlich der Längsachse beweglich ausgebildet und die zweite Bearbeitungseinheit zum Beispiel in einer horizontal orientierten Fläche beweglich ausgebildet. Der jeweilige Aufwand, um eine entsprechende Beweglichkeit zu realisieren, ist gering.

In einer weiteren Variante der Erfindung ist vorgesehen, daß die Bearbeitungseinheit und/oder die einzelnen Spindeln um eine Achse oder ein Gelenk verkippbar ausgebildet sind.

Eine solche Ausgestaltung dient insbesondere dazu, zum Beispiel schräge Bohrungen an dem Werkstück auszuführen. Es ist aber auch günstig, eine geringe Verkippung der Spindel an der Bearbeitungseinheit vorzusehen, um zum Beispiel den Sturz beim Fräsen zu realisieren. Es ist auch möglich, daß die Verkippung der Spindel beziehungsweise der Bearbeitungseinheit zum Beispiel dynamisch mit Hilfe eines entsprechenden Stellantriebes erfolgt, oder aber die Bearbeitungseinheit beziehungsweise die Spindel in einen entsprechend feststehenden Winkel verkippt wird. Die Orientierung der Kippachse ist hierbei nicht beschränkt.

Insbesondere ergibt sich die Möglichkeit, daß für die Ausführung von Bearbeitungsschritten entlang einer zur Vertikalen und/oder Horizontalen geneigten Achse die Bearbeitungseinheit eine oder mehrere parallel zu dieser geneigten Achse orientierte Spindeln aufweist und die Überlagerung der Bewegung der Bearbeitungseinheit und der Spannvorrichtung zu einer Relativspindelbewegungsrichtung führt, die parallel zu dieser geneigten Achse ist. Hierdurch ist es möglich, durch geringsten Aufwand eine Anordnung zu treffen, die es erlaubt, schräge Bearbeitungen, zum Beispiel das Bohren von schrägen Löchern und so weiter, zu realisieren. Dies rührt her von der Ausnützung der Überlagerung der Bewegung einerseits der Spannvorrichtung und andererseits der Bearbeitungseinheit, die durch die Steuerung entsprechend interpolierend vorgenommen wird. Insbesondere erlaubt die frei programmierbare, bevorzugt computergestützte Steuerung eine sehr große Vielzahl von verschiedenen Bearbeitungen.

Bevorzugt wird die Spindel, deren Achse geneigt ist, so an der Bearbeitungseinheit (zum Beispiel am Rand oder in der Ecke) positioniert, daß keine anderen Spindeln hiervon beeinträchtigt werden oder die Anordnung mit anderen Elementen des Bearbeitungszentrums nicht kollidiert. Darüber hinaus sieht die Erfindung vor, daß die Verkippung der einzelnen Spindeln auch dynamisch realisierbar ist, wobei hierfür ebenfalls ein eigener Stellantrieb angeordnet ist. Es ist aber auch möglich, diese Verkippung fest an der Bearbeitungseinheit zu realisieren.

Erfindungsgemäß wird vorgeschlagen, daß die Bearbeitungseinheit die Spindeln in mehreren übereinander angeordneten Reihen trägt. Die Anordnung der Spindeln in der Reihe und gegebenenfalls in entsprechenden Spalten erfolgt derart, daß bei einer Bearbeitung möglichst alle benötigten Spindeln einsetzbar sind und gleichzeitig keine Kollision mit der Spannvorrichtung oder anderen Elementen des Bearbeitungszentrums erfolgt.

Da oftmals an der Spannvorrichtung eine vertikale Verschiebbarkeit vorgesehen ist, ist es problemlos möglich, die jeweils betreffende Spindel an der jeweils gewünschten Stelle des Werkstückes zum Eingriff zu bringen. Allgemein ist es natürlich auch möglich, an der Bearbeitungseinheit neben einer horizontalen auch eine vertikale Bewegungsachse vorzusehen, hierin ist die Erfindung in keinster Weise beschränkt.

Es ist vorgesehen, pro Bearbeitungseinheit 10, 15, 16, 20, 25 oder noch mehr Spindeln anzuordnen. Diese Spindeln sind jeweils anzutreiben, wobei natürlich bei einer entsprechend großen Anzahl von Spindeln der Aufwand für den Antrieb entsprechend steigt. Die Erfindung schlägt daher vor, daß ein Antrieb für mehrere oder alle Spindeln einer Bearbeitungseinheit vorgesehen ist.

Alternativ hierzu ist es natürlich möglich, wie das zum Beispiel in einer erfindungsgemäßen Variante beschrieben ist, für jede Spindel einen Einzelantrieb vorzusehen. Dadurch ist es möglich, durch die Steuerung auf den Antrieb einzelner Spindeln einzuwirken und diese zum Beispiel anzuhalten oder zu regeln.

Insbesondere ist es günstig, daß der Antrieb für eine Spindelgruppe in dieser Gruppe angeordnet ist und je für den Antrieb einer Teilgruppe der Spindeln ein Antriebsriemen gegebenenfalls mit einer Riemenspannvorrichtung vorgesehen ist. Durch eine solche Ausgestaltung ist es möglich, eine deutlich geringere Anzahl von Antrieben zum Antrieb einer größeren Anzahl von Spindeln vorzusehen, wodurch der jeweilige Aufwand für den Spindelantrieb deutlich gesenkt wird. Oftmals wird als Antrieb ein Antriebsriemen vorgesehen; dies könnte aber auch durch ein Getriebe oder direkt erfolgen, wobei bei dem Einsatz eines Riemens eine.Spannvorrichtung für den Riemen eingesetzt wird, um einen sicheren Antrieb der Spindeln zu gewährleisten.

Die Spannvorrichtung, welche das Werkstück oder die Werkstücke trägt, ist bevorzugt horizontal und/oder vertikal bewegbar ausgebildet. Dies dient dazu, das Werkstück oder die Werkstücke für die Bearbeitung zu positionieren und/oder während der Bearbeitung zu bewegen. Natürlich umfaßt die Erfindung auch eine Variante, bei welcher die Spannvorrichtung eine höhere Beweglichkeit erlaubt, insbesondere wenn die Spannvorrichtung für das Werkstück eine mindestens um eine horizontale oder vertikale Drehachse drehbare Bearbeitung erfordert. Dabei ist die Erfindung nicht darauf beschränkt, daß die Spannvorrichtung und/oder die Bearbeitungseinheit jeweils um drei Raumachsen beweglich ausgebildet sind. Dies kann bei speziellen Bearbeitungsschritten durchaus von Vorteil sein, die Erfindung ist diesbezüglich nicht beschränkt.

Insbesondere eine drehbare Ausgestaltung der Spannvorrichtung erlaubt eine beliebige Positionierung des Werkstückes oder mehrerer Werkstücke in dem Bearbeitungszentrum.

In einer weiteren Ausgestaltung der Erfindung ist vorgesehen, daß die Spannvorrichtung ein oder mehrere, insbesondere zwei beziehungsweise vier Werkstücke trägt, die bevorzugt symmetrisch oder punktsymmetrisch angeordnet sind. Je nach Größe der zu bearbeitenden Werkstücke können auf der Spannvorrichtung mehrere Werkstücke aufgespannt werden. Dies erlaubt gleichzeitig aber auch unterschiedliche Bearbeitungsprinzipien. Wie bereits oben ausgeführt, ist es möglich, bei einer Anordnung von zwei Bearbeitungseinheiten in dem Bearbeitungszentrum eine Bearbeitungseinheit nur querbeweglich und die andere Bearbeitungseinheit quer- und längsbeweglich auszubilden. Soweit nur ein (gegebenenfalls) großes Werkstück zu bearbeiten ist, ist es günstig, wenn eine Bearbeitungseinheit als Spezialbearbeitungseinheit speziell auf diese Bearbeitung ausgebildet ist.

Ist es möglich, auf der Spannvorrichtung mehrere gegebenenfalls kleinere Werkstücke aufzuspannen, so können zum Beispiel in zwei verschiedenen Aufspannlagen zwei mal zwei, also insgesamt vier Teile bearbeitet werden, wodurch bei einem entsprechenden Wenden der Spannvorrichtung eine vierseitige Bearbeitung möglich ist. Es kann von Vorteil sein, daß eine der beiden, in Opposition zueinander stehenden Bearbeitungseinheiten in der Ebene voll flexibel beweglich ausgebildet ist.

In einer Variante der Erfindung ist es auch möglich, zum Beispiel eine dritte Bearbeitungseinheit anzuordnen, die parallel oder rechtwinklig zu den in Opposition zueinander stehenden beiden Bearbeitungseinheiten angeordnet ist. Die Variabilität der Erfindung wird damit noch größer.

Es ist von Vorteil, wenn an dem Bearbeitungszentrum eine Verkettungsvorrichtung für den Transport der Werkstücke zwischen verschiedenen Bearbeitungszentren vorgesehen ist und die Spannvorrichtung das/die Werkstück/e von der Verkettungsvorrichtung übernimmt beziehungsweise nach Abschluß der Bearbeitung an diese abgibt.

Oftmals sind mehrere Bearbeitungszentren in einer Bearbeitungsstraße hintereinander angeordnet und durch eine entsprechende Verkettungsvorrichtung miteinander verbunden. Für einen möglichst vollautomatischen Betrieb einer solchen Bearbeitungsstraße beziehungsweise des einzelnen Bearbeitungszentrums ist es günstig, wenn die Spannvorrichtung das von der Verkettungsvorrichtung angelieferte Werkstück selbsttätig ergreift und spannt und der Bearbeitung zuführt und nach der Bearbeitung wieder in die Verkettungsvorrichtung zurückgibt.

Insbesondere ist es von Vorteil, wenn die Spannvorrichtung an einem an einem Portal verfahrbaren Schlitten vorgesehen ist. Eine solche Anordnung ist insbesondere im Hinblick auf den Einsatz der Erfindung in einer Bearbeitungsstraße mit Verkettungsvorrichtung von Vorteil, da das Portal in leichter Weise erlaubt, daß die Spannvorrichtung das Werkstück von der Verkettungsvorrichtung übernimmt. Auf die Zwischenschaltung eines zusätzlichen, kostenaufwendigen Beladeroboters, der ansonsten das Werkstück von der Verkettungsvorrichtung abnimmt und in die Spannvorrichtung einlegt, kann hier verzichtet werden, der Kostenvorteil geht automatisch einher.

Alternativ zum Einsatz eines Portales, an welchem die Spannvorrichtung gegebenenfalls das Werkstück hängend transportiert, ist es möglich, daß die Spannvorrichtung an einem verfahrbaren Fahrständer vorgesehen ist. Auch diese zweite Alternative ist erfindungsgemäß einsetzbar.

Die Ausbildung des Portales wird gemäß einer weiteren erfindungsgemäßen Variante so gewählt, daß die Bearbeitungseinheit und/oder der Anschluß an die Verkettungsvorrichtung von dem Portal übergriffen wird. Dadurch wird eine hohe Beweglichkeit des Portales ermöglicht und daher die Spannvorrichtung beliebig positionierbar.

Günstigerweise wird an dem Portal die Arbeitsraumabdeckung des Bearbeitungszentrums angeschlossen, wodurch in günstiger, einfacher Weise die notwendigen Arbeitsraumabdeckungen das gesamte Bearbeitungszentrum abschließen.

Die Erfindung ist schematisch in der Zeichnung dargestellt. Es zeigen:
- Fig. 1, 2: in einer Ansicht zwei Varianten des erfindungsgemäßen Bearbeitungszentrums;
- Fig. 3: in einer Ansicht das erfindungs-gemäße Bearbeitungszentrum mit schräggestellter Bearbeitungseinheit;
- Fig. 4: eine Seitenansicht der Erfindung nach Fig. 2;
- Fig. 5: eine schematische Draufsicht auf die Erfindung gemäß Fig. 2;
- Fig. 6, 7: jeweils in Draufsicht zwei Varianten des erfindungsgemäßen Bearbeitungszentrums und
- Fig. 8: in einer Ansicht die Vorderseite der Bearbeitungseinheit des erfindungsgemäßen Bearbeitungszentrums.

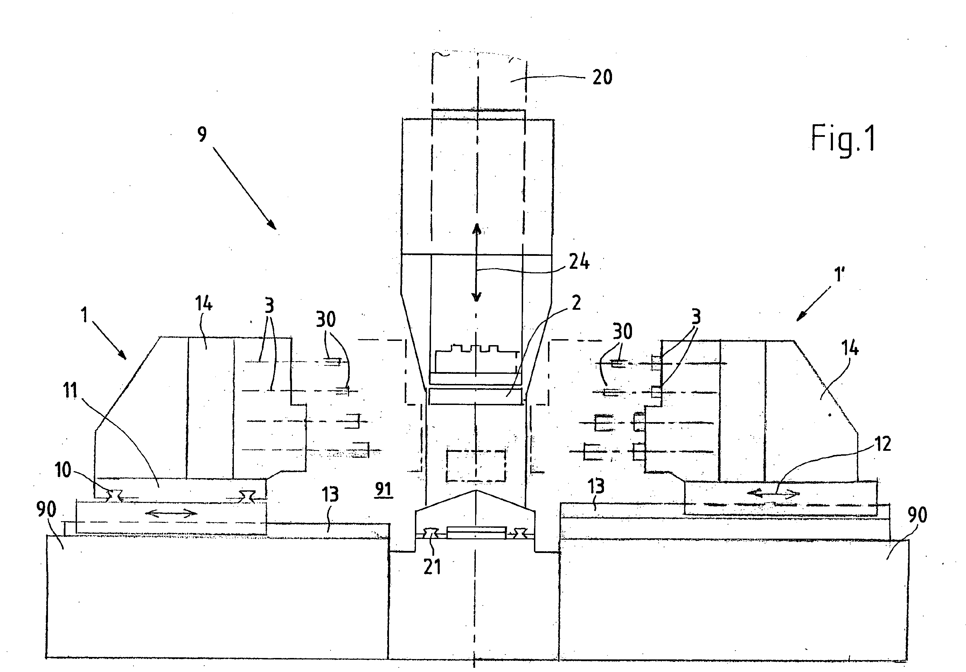

In Fig. 1 ist die erste Variante der Erfindung schematisch dargestellt. Das Bearbeitungszentrum ist mit der Bezugsziffer 9 allgemein gekennzeichnet. Das Bearbeitungszentrum 9 weist ein Maschinenbett 90 auf, über welches sich das Bearbeitungszentrum am Boden abstützt. Das Maschinenbett 90 trägt in der hier dargestellten Ausführungsform je eine Bearbeitungseinheit 1, 1', die sich links und rechts von der Spannvorrichtung 2 anordnen und so eine Bearbeitung des Werkstückes 4, welches von der Spannvorrichtung 2 gehalten wird, in Opposition erlauben.

Es handelt sich durchgängig um schematische Darstellungen, die nicht alle kontruktiven Einzelheiten zeigen, aber das Wesen der Erfindung deutlich machen.

Das Werkstück 4 ist von der Spannvorrichtung 2 gehalten, wobei die Spannvorrichtung 2 eine vertikale Positionierung des Werkstückes 4 entlang des Doppelpfeiles 24 erlaubt. In dem hier dargestellten Ausführungsbeispiel wird die Spannvorrichtung 2 von einem Fahrständer 20 gehalten, an dem die Spannvorrichtung 2 vertikal (Doppelpfeil 24) versetzbar ist und, rechtwinklig zur Blattebene, verschiebbar ist. Der Fahrständer 20 ruht hierzu auf der Führungsbahn 21, die zwischen den beiden Bearbeitungseinheiten 1 1' angeordnet ist.

Gemäß der in Fig. 1 gezeigten Variante bietet die Spannvorrichtung 2 zwei Bewegungsachsen für das Werkstück 4, nämlich eine vertikale Achse 24 und eine Achse senkrecht zur Blattebene.

Es ist möglich, in dieser Fig. nicht angedeutet, daß das Werkstück 4 um eine vertikale Achse verdrehbar ist.

Der Aufbau der hier dargestellten Bearbeitungseinheiten 1, 1' ist etwas unterschiedlich. Prinzipiell ruhen die Bearbeitungseinheiten jeweils auf einer Führungsschiene 13, die auf dem Maschinenbett 90 angeordnet ist. Entlang dieser Führungsschiene ist die Bearbeitungseinheit längsbeweglich und dadurch die Spindel 3 der Bearbeitungseinheit gegen das Werkstück 4 anstellbar. Zur Erhöhung der Übersichtlichkeit werden die Werkzeugspindeln 30 oftmals nur durch die Spindelachsen angedeutet.

Im Gegensatz zu der Bearbeitungseinheit 1' auf der rechten Seite weist die linke Bearbeitungseinheit 1 zwischen dem die verschiedenen Werkzeugspindeln 3 tragenden Bearbeitungskopf 14 und der Führungsschiene 13 noch einen Querschlitten 11 auf. Dieser Querschlitten 11 wird gebildet durch eine Querschlittenführung 10, auf welcher der Bearbeitungskopf 14 ruht und ebenfalls rechtwinklig zur Blattebene verschiebbar ist. Dadurch ist die linke Bearbeitungseinheit 1 in einer horizontalen Ebene beweglich.

Im Gegensatz hierzu weist die rechte Bearbeitungseinheit 1' einen solchen Querschlitten 11 nicht auf. Diese Bearbeitungseinheit ist nur über die Führungsbahn 13 in einer Dimension entlang des Doppelpfeiles 12 beweglich.

Je nach Einsatzzweck des Bearbeitungszentrums 9 ist vorgesehen, die hier gezeigte Anordnung von Längsbeweglichkeit 12 beziehungsweise Längs- und Querbeweglichkeit zu kombinieren, dies hängt letztendlich von der Form und Anzahl der zu bearbeitenden Werkstücke 4 ab (es gibt hier mehrere alternative Varianten).

Der Bearbeitungskopf 14 trägt eine Vielzahl von Werkzeugspindeln 3, die hier zur besseren Übersichtlichkeit nur durch ihre Lage der jeweiligen Achsen angedeutet sind. Auf den Werkzeugspindeln 3 ist, dem Werkstück 4 zugewandt, das Werkzeug 30 angeordnet, welches auch hier zur höheren Übersichtlichkeit nur angedeutet ausgeführt ist. Die Werkzeugspindeln 3 sind hierbei in vier Reihen übereinander angeordnet, wobei das Werkstück 4 über die Vertikalpositionierung 24 und der Querbewegung (rechtwinklig zur Blattebene) der Spannvorrichtung 2 zunächst gegenüber der Bearbeitungseinheit 1' an der gewünschten Werkzeugspindel 3 positioniert wird. Natürlich ist die Anordnung der Werkzeugspindeln in Größe und Abstand der Reihen so gewählt, daß diese in Bezug auf das jeweilige Werkstück nicht kollidieren oder unbeabsichtigte Bearbeitungen vornehmen.

Ist diese Positionierung abgeschlossen, so wird die linke Bearbeitungseinheit 1 mit Hilfe des Querschlittens 11 parallel zur Querbewegung der Spannvorrichtung 2 so positioniert, daß die gewünschte Spindel die gewünschte Bearbeitung ausführt. Die jeweilige Höhenlage ist durch die gleiche Lage der Spindel und gleiche Lage des zweiten Werkstücks bereits vorgegeben. Gegebenenfalls kann aber auch eine zusätzliche Achse an der linken Bearbeitungseinheit eine zusätzliche Variabilität ergeben.

Für die Bearbeitung dient die Längsbewegung in Richtung des Doppelpfeiles 12 der beiden Bearbeitungseinheiten 1, 1' auf den jeweiligen Führungsschienen 13.

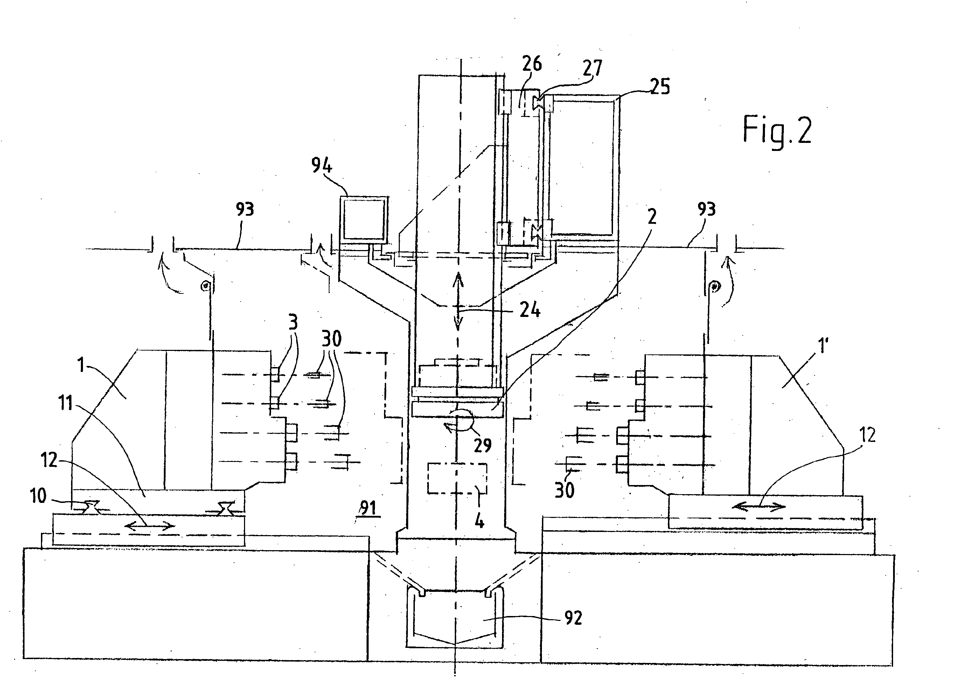

Sowohl in Fig. 1 wie auch in Fig. 2 ist die Bearbeitungseinheit 1 in der zurückgezogene Position gezeigt. Strichpunktiert ist die vorgeschobenen Position der Bearbeitungseinheit 1, 1' gezeigt, wobei sich ergibt, daß die unteren Werkzeugspindeln 3 beziehungsweise deren Werkzeuge 30 weiter in den Arbeitsraum 91 des Bearbeitungszentrums hineinragen wie die oberen. Dadurch wird die Gefahr von Kollisionen der oberen Werkzeugspindeln 3 mit der Spannvorrichtung 2 vermieden.

Im Gegensatz zu der Variante nach Fig. 1 ist in Fig. 2 anstelle eines Fahrständers die Spannvorrichtung an einem Portal 25 angeordnet. Das Portal überragt die Bearbeitungseinheiten und erlaubt eine Verfahrbarkeit des darauf gelagerten Schlittens 26 in einer Richtung rechtwinklig zur Blattebene. Hierfür trägt das Portal 25 Führungsschienen 27. Die Spannvorrichtung 2 ist an dem Schlitten 26 wiederum vertikal (Doppelpfeil 24) positionierbar und erlaubt eine Verdrehung des Werkstückes 4 um eine vertikale Drehachse entlang des Drehpfeiles 29. Gegenüber der Spannvorrichtung an einem Fahrständer 20 (nach Fig. 1) bietet die Ausgestaltung nach Fig. 2 Vorteile.

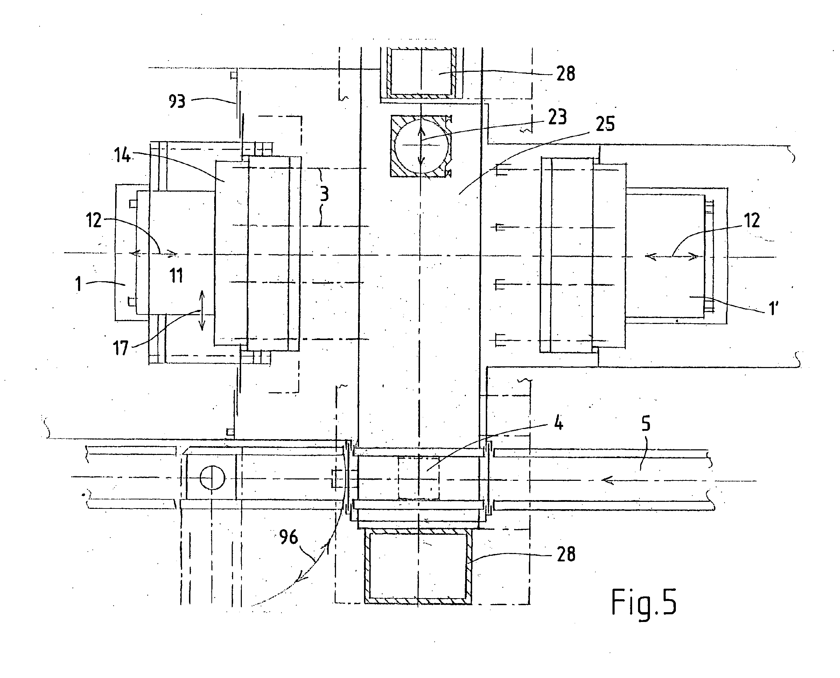

Zunächst ist es möglich, daß wenn das Werkstück 4 an der Spannvorrichtung 2 hängend montiert ist, der Raum unterhalb des Werkstückes für den Spanabtransport frei ist. Die Abförderrinne 92 für die Späne ist angedeutet. Des weiteren erlaubt der Vorschlag der Spannvorrichtung 2 mit einem Portal 25 in einfacher Weise die Einbindung des Bearbeitungszentrums in einer zum Beispiel in Fig. 5 dargestellten Verkettungsvorrichtung 5. Da auf den Einsatz eines separaten Be- und Entladeroboters zwischen der Verkettungsvorrichtung 5 und der Spannvorrichtung 2 verzichtet werden kann, ergreift die an dem Portal 25 geführte Spannvorrichtung 2 das Werkstück 4 selbständig.

Des weiteren erlaubt die Verwendung des Portales 25 auch einen verhältnismäßig leichten Aufbau der die das Bearbeitungszentrum verschließenden Verkleidung 93, die teilweise an dem Portalträger 25 oberhalb der Bearbeitungseinheit 1 anschließbar ist. Gegebenenfalls werden zusätzliche Verkleidungsträger 94 parallel zum Portal 25 vorgesehen.

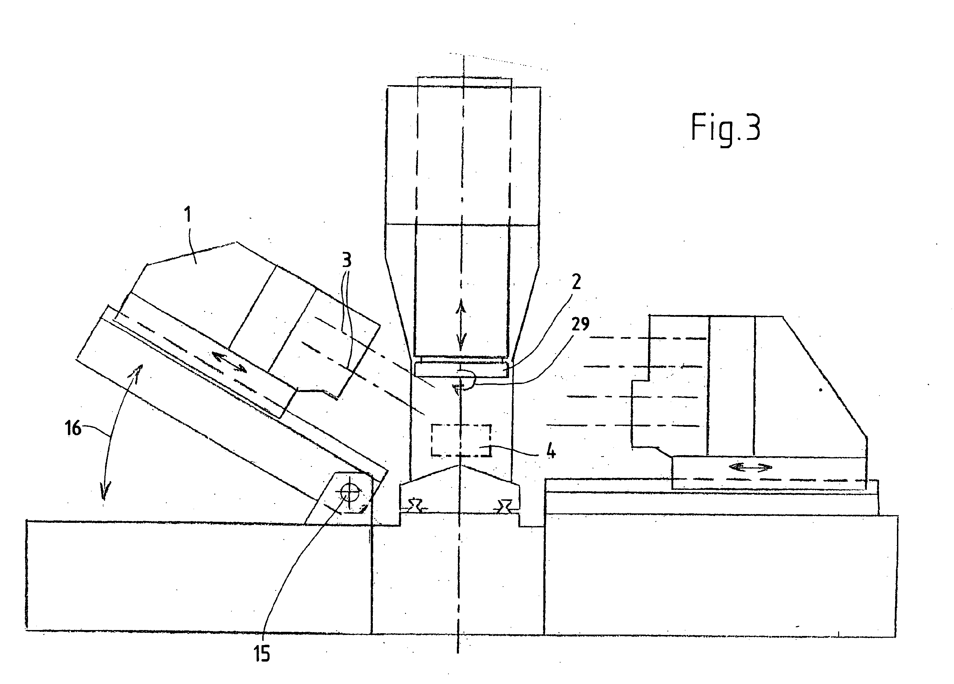

In Fig. 3 ist eine erfindungsgemäße Variante des Bearbeitungszentrums 9 gezeigt, wobei die linke Bearbeitungseinheit 1 um ein Kippgelenk 15 derart verkippt werden kann (Kippdoppelpfeil 16), um in das Werkstück 4 schräge Bohrungen oder Fräsbearbeitungen und dergleichen an- oder einzubringen. Nicht gezeigt ist die Abstützung beziehungsweise der Antrieb für die Verkippung, diese ist aus Übersichtsgründen weggelassen.

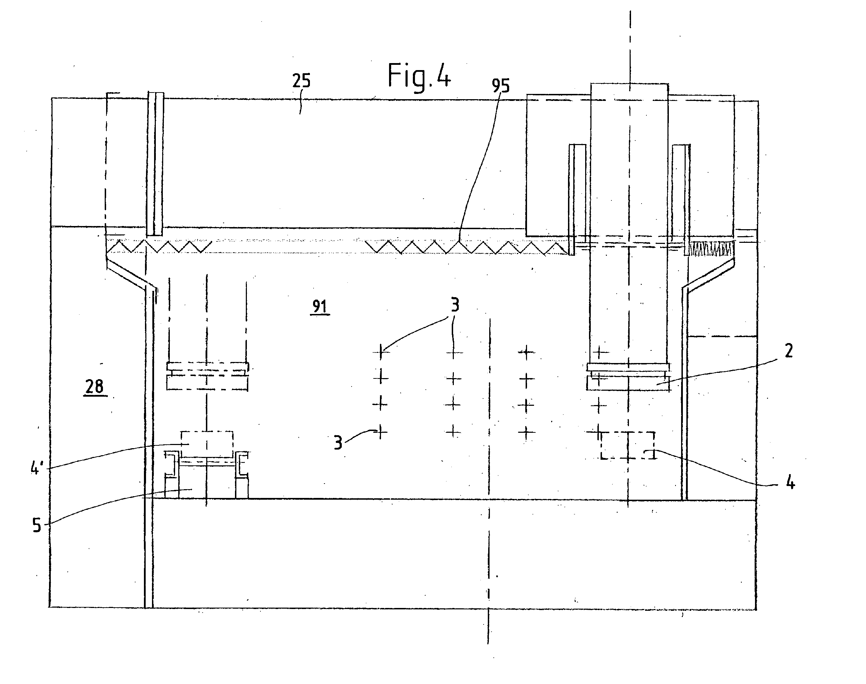

In Fig. 4 ist in einer Seitenansicht die in einer Portalbauweise 25 ausgeführte Erfindung gezeigt. An dem Schlitten 26 schließt beidseitig eine faltbalgenartige Verkleidung 95 an, die den Arbeitsraum 91 nach oben hin abschließt. Im rechten Teil des Arbeitsraumes 91 sind in vier Reihen und in vier Spalten insgesamt 16 Werkzeugspindeln 3 mit einem Kreuz für deren Achse schematisch angedeutet. Das Werkzeug 4 ist an jeder dieser Werkzeugspindeln 3 positionierbar. Ganz links ist die Verkettungsvorrichtung 5 gezeigt und strichpunktiert die Spannvorrichtung 2 in dieser Stellung. Strichpunktiert liegt auch ein gerade angefördertes oder ein soeben weggefördertes Werkstück 4' auf der Verkettungsvorrichtung 5 auf, um das Werkstück 4' einer anderen Bearbeitung zuzuführen. Der Vorteil der Portalbauweise 25 liegt darin, daß die Spannvorrichtung 2 nicht nur zum Aufspannen des Werkstückes 4 während dessen Bearbeitung dient, sondern auch gleichzeitig das Werstück 4' von der Verkettungsvorrichtung 5 genommen oder auf dieser abgelegt werden kann.

In Fig. 5 ist eine Draufsicht nach Fig. 2 gezeigt. Das Portal 25 ist von den Stützen 28 gehalten, wobei das Portal nicht nur die Länge der Bearbeitungseinheiten 1 überragt, sondern auch über die Verkettungsvorrichtung 5 reicht.

Die Verkettungsvorrichtung 5 ist als Transportband oder dergleichen ausgebildet und durch entsprechende Schleusentüren von dem Bearbeitungsraum 91 abgetrennt, wodurch es möglich ist, eine automatische Zu- und Ablieferung der Werkstücke 4, 4' zu erreichen. Die Spannvorrichtung 2 ist, wie hier mit Doppelpfeil 23 dargestellt, auf dem Portal 25 längsbeweglich. Diese Längsbeweglichkeit ist rechtwinklig zur Förderrichtung der Verkettungsvorrichtung 5.

Die hierzu parallele Bewegung des Querschlittens 11 ist mit dem Doppelpfeil 17 angedeutet. Bewegliche Verkleidungselemente 93 schließen den Arbeitsraum 91 im Bereich der Bearbeitungseinheiten 1 ab.

Da die rechte Bearbeitungseinheit 1' nur in einer Dimension beweglich ist, ist dort die Konstruktion für die Verkleidung 93 einfacher. Um den Arbeitsraum 91 zugänglich zu machen, sind Schiebetüren vorgesehen; da die Verkettung 5 eine dieser Schiebetüren verdeckt, ist die Verkettung im Bereich der Türe wegschwenkbar. Der Verschwenkbereich der Verkettung 5 ist mit dem Doppelpfeil 96 angedeutet. Alternativ können auch Schwenktüren eingesetzt werden.

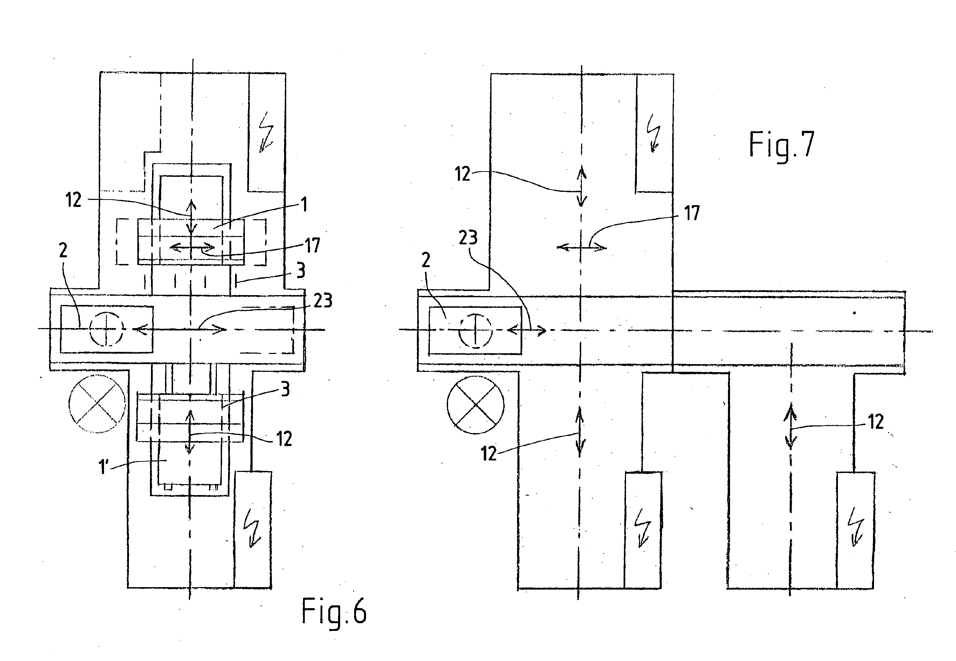

Fig. 6 zeigt, ähnlich wie Fig. 7, verschiedene grobe Anordnungsmöglichkeiten des Bearbeitungszentrums. Bei der Variante nach Fig. 6 stehen nur zwei Bearbeitungseinheiten 1 und 1' in Opposition zueinander. Der prinzipielle modulartige Aufbau des erfindungsgemäßen Bearbeitungszentrums erlaubt es aber, daß zuerst nur mit einer Bearbeitungseinheit begonnen wird, dann die dazu in Opposition stehende zweite Bearbeitungseinheit ergänzt wird und dann in einem späteren Entwicklungsstadium zum Beispiel drei Bearbeitungseinheiten, wie in Fig. 7 angedeutet, aufgebaut werden. Hieraus ist es möglich, das erfindungsgemäße Bearbeitungszentrum den jeweiligen Bearbeitungsaufgaben optimal anzupassen.

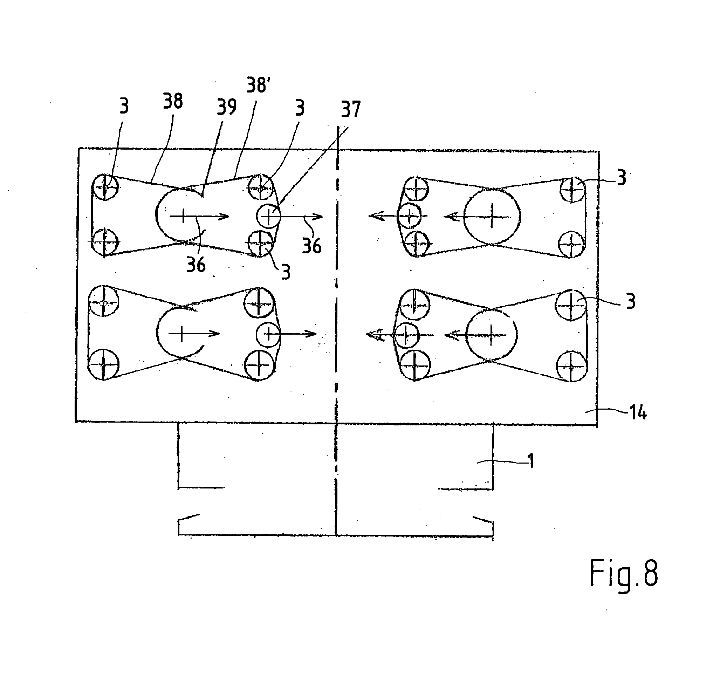

Wie dargestellt, werden 16 Antriebsspindeln 3 zum Beispiel für eine Bearbeitungseinheit 1 vorgeschlagen. Der Einsatz von 16 Antrieben hierfür ist verhältnismäßig aufwendig, weshalb in Fig. 8 ein Antriebskonzept vorgeschlagen wird, für welches gegebenenfalls auch eigenständig Schutz begehrt wird, also unabhängig von der speziellen Ausgestaltung des Bearbeitungszentrums. Es werden hierbei eine Gruppe von Werkzeugspindeln, hier zum Beispiel vier Werkzeugspindeln, von einem Antrieb 39 angetrieben. An dem Antrieb 39, zum Beispiel einem Elektromotor, greifen zwei Keilriemen 38, 38' an, die jeweils zwei Werkzeugspindeln 3 antreiben. Insgesamt werden durch den einen Antrieb 39 vier Werkzeugspindeln 3 angetrieben. Aufgrund der Längung des Riemens sind Riemenspannvorrichtungen vorgesehen, wobei dies zum einen eine Spannrolle 37 sein kann oder aber die Anordnung des Antriebsmotors 39 auf einer beweglichen, aber festlegbaren Spannplatte. Die Spannrichtung ist jeweils durch den Pfeil 36 angezeigt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungszentrum (9) für die insbesondere spanabhebende Bearbeitung mindestens eines Werkstückes (4), wobei das mindestens eine Werkstück (4) von einer mindestens entlang einer Richtung verfahrbaren Spannvorrichtung (2) gehalten ist und eine mindestens entlang einer Richtung verfahrbare Bearbeitungseinheit (1) mindestens drei je ein Werkzeug (30) antreibende Werkzeugspindeln (3) trägt und die für eine Positionierung oder die Bearbeitung notwendige Relativbewegung oder für die Bearbeitung und Positionierung notwendige Relativbewegung von Werkzeug (30) und Werkstück (4) sowohl durch die Bewegung der Spannvorrichtung (2) als auch durch die Bewegung der Bearbeitungseinheit (1), beide der Bewegungen gleichzeitig oder jeweils nur eine der Bewegungen erfolgt.

2. Bearbeitungszentrum nach Anspruch 1, **dadurch gekennzeichnet, daß** das Bearbeitungszentrum eine oder mehrere Bearbeitungseinheiten (1) aufweist.

3. Bearbeitungszentrum nach einem oder beiden der vorhergehenden Ansprüche, **dadurch gekennzeichnet, daß** das oder die Werkstück/e (4) zumindest gleichzeitig von zwei Seiten und an zwei Stellen bearbeitet wird/werden.

4. Bearbeitungszentrum nach einem oder mehreren der vorhergehenden Ansprüche, **dadurch gekennzeichnet, daß** das oder die Werkstück/e (4) zumindest gleichzeitig von zwei Seiten oder an zwei Stellen bearbeitet wird/werden.

5. Bearbeitungzentrum nach einem oder mehreren der vorhergehenden Ansprüche, **dadurch gekennzeichnet, daß** das Werkstück (4) zwischen zwei Bearbeitungseinheiten (1) angeordnet ist.

6. Bearbeitungszentrum nach einem oder mehreren der vorhergehenden Ansprüche, **dadurch gekennzeichnet, daß** die zwischen der Bearbeitungseinheit (1) und der Spannvorrichtung (2) verteilten verschiedenen Bewegungen eine relative Positionierung beziehungsweise Bewegung des Werkstückes (4) und des Werkzeuges (30) entlang der drei Raumachsen erlauben.

7. Bearbeitungszentrum nach einem oder mehreren der vorhergehenden Ansprüche, **dadurch gekennzeichnet, daß** die zwischen der Bearbeitungseinheit (1) und der Spannvorrichtung (2) verteilten verschiedenen Bewegungen eine relative Positionierung beziehungsweise Bewegung des Werkstückes (4) oder des Werkzeuges (30) entlang der drei Raumachsen erlauben.

8. Bearbeitungszentrum nach einem oder mehreren der vorhergehenden Ansprüche, **dadurch gekennzeichnet, daß** die Bearbeitungseinheit (1) eine Anzahl von Spindeln (3) trägt, die mindestens der Anzahl der einzusetzenden Werkzeuge (30) für die Bearbeitung des Werkstückes (4) beziehungsweise der Werkstücke entspricht.

9. Bearbeitungszentrum nach einem oder mehreren der vorhergehenden Ansprüche, **dadurch gekennzeichnet, daß** die Bearbeitungseinheit (1) längs- und querbeweglich ausgebildet ist.

10. Bearbeitungszentrum nach einem oder mehreren der vorhergehenden Ansprüche, **dadurch gekennzeichnet, daß** die Bearbeitungseinheit (1) und die Spindel (3) um eine Achse oder ein Gelenk verkippbar ausgebildet ist.

11. Bearbeitungszentrum nach einem oder mehreren der vorhergehenden Ansprüche, **dadurch gekennzeichnet, daß** die Bearbeitungseinheit (1) oder die Spindel (3) um eine Achse oder ein Gelenk verkippbar ausgebildet ist.

12. Bearbeitungszentrum nach einem oder mehreren der vorhergehenden Ansprüche, **dadurch gekennzeichnet, daß** für die Ausführung von Bearbeitungsschritten entlang einer zur Vertikalen und Horizontalen geneigten Achse die Bearbeitungseinheit (1) eine parallel zu dieser geneigten Achse geneigte Spindel aufweist und die Überlagerung der Bewegung der Bearbeitungseinheit (1) und der Spannvorrichtung (2) zu einer Relativspindelbewegungsrichtung führt, die parallel zu dieser geneigten Achse ist.

13. Bearbeitungszentrum nach einem oder mehreren der vorhergehenden Ansprüche, **dadurch gekennzeichnet, daß** für die Ausführung von Bearbeitungsschritten entlang einer zur Vertikalen oder Horizontalen geneigten Achse die Bearbeitungseinheit (1) eine parallel zu dieser geneigten Achse geneigte Spindel aufweist und die Überlagerung der Bewegung der Bearbeitungseinheit (1) und der Spannvorrichtung (2) zu einer Relativspindelbewegungsrichtung führt, die parallel zu dieser geneigten Achse ist.

14. Bearbeitungszentrum nach einem oder mehreren der vorhergehenden Ansprüche, **dadurch gekennzeichnet, daß** die Bearbeitungseinheit (1) die Spindeln (3) in mehreren übereinander angeordneten Reihen trägt.

15. Bearbeitungszentrum nach einem oder mehreren der vorhergehenden Ansprüche, **dadurch gekennzeichnet, daß** die Spindeln (3) an der Bearbeitungseinheit (1) derart angeordnet sind, daß diese nicht mit der Spannvorrichtung (2) oder anderen Elementen des Bearbeitungszentrums kollidieren.

16. Bearbeitungszentrum nach einem oder mehreren der vorhergehenden Ansprüche, **dadurch gekennzeichnet, daß** die Werkzeuge der unteren Spindeln (3) weiter in den Arbeitsraum (91) des Bearbeitungszentrums (9) vorstehen als die Werkzeuge der oberen Spindeln.

17. Bearbeitungszentrum nach einem oder mehreren der vorhergehenden Ansprüche, **dadurch gekennzeichnet, daß** für jede Spindel (3) ein Einzelantrieb vorgesehen ist.

18. Bearbeitungszentrum nach einem oder mehreren der vorhergehenden Ansprüche, **dadurch gekennzeichnet, daß** ein Antrieb (39) für mehrere oder alle Spindeln (3) einer Bearbeitungseinheit (1) vorgesehen ist.

19. Bearbeitungszentrum nach einem oder mehreren der vorhergehenden Ansprüche, **dadurch gekennzeichnet, daß** der Antrieb (39) für eine Spindelgruppe in dieser Gruppe angeordnet ist und je für den Antrieb (39) einer Teilgruppe der Spindeln ein Antriebsriemen (38), gegebenenfalls mit einer Riemenspannvorrichtung vorgesehen ist.

20. Bearbeitungszentrum nach einem oder mehreren der vorhergehenden Ansprüche, **dadurch gekennzeichnet, daß** die Riemenspannvorrichtung durch eine beweglich festlegbare, auf den Antriebsriemen (38) wirkende Spannrolle (37) gebildet ist.

21. Bearbeitungszentrum nach einem oder mehreren der vorhergehenden Ansprüche, **dadurch gekennzeichnet, daß** die Riemenspannvorrichtung durch eine beweglich festlegbare Spannplatte gebildet ist, die den Antrieb trägt.

22. Bearbeitungszentrum nach einem oder mehreren der vorhergehenden Ansprüche, **dadurch gekennzeichnet, daß** die Spannvorrichtung (2) für das Werkstück (4) um mindestens eine horizontale und vertikale Drehachse drehbar ist.

23. Bearbeitungszentrum nach einem oder mehreren der vorhergehenden Ansprüche, **dadurch gekennzeichnet, daß** die Spannvorrichtung (2) für das Werkstück (4) um mindestens eine horizontale oder vertikale Drehachse drehbar ist.

24. Bearbeitungszentrum nach einem oder mehreren der vorhergehenden Ansprüche, **dadurch gekennzeichnet, daß** die Spannvorrichtung (2) horizontal und vertikal bewegbar ausgebildet ist, um die Werkstücke (4) entsprechend zu positionieren beziehungsweise zu bewegen.

25. Bearbeitungszentrum nach einem oder mehreren der vorhergehenden Ansprüche, **dadurch gekennzeichnet, daß** die Spannvorrichtung (2) horizontal oder vertikal bewegbar ausgebildet ist, um die Werkstücke (4) entsprechend zu positionieren beziehungsweise zu bewegen.

26. Bearbeitungszentrum nach einem oder mehreren der vorhergehenden Ansprüche, **dadurch gekennzeichnet, daß** die Spannvorrichtung (2) ein oder mehrere, insbesondere zwei beziehungsweise vier Werkstücke (4) trägt, die bevorzugt symmetrisch oder punktsymmetrisch zu einer Drehachse der Spannvorrichtung angeordnet sind.

27. Bearbeitungszentrum nach einem oder mehreren der vorhergehenden Ansprüche, **dadurch gekennzeichnet, daß** an dem Bearbeitungszentrum (9) eine Verkettungsvorrichtung (5) für den Transport der Werkstücke (4) zwischen verschiedenen Bearbeitungszentren (9) vorgesehen ist und die Spannvorrichtung (2) das beziehungsweise die Werkstück/e (4) von der Verkettungsvorrichtung (5) übernimmt beziehungsweise nach Abschluß der Bearbeitung an diese abgibt.

28. Bearbeitungszentrum nach einem oder mehreren der vorhergehenden Ansprüche, **dadurch gekennzeichnet, daß** die Spannvorrichtung (2) an einem an einem Portal (25) verfahrbaren Schlitten vorgesehen ist.

29. Bearbeitungszentrum nach einem oder mehreren der vorhergehenden Ansprüche, **dadurch gekennzeichnet, daß** das Portal (25) die Bearbeitungseinheit (1) und den Anschluß an die Verkettungsvorrichtung (5) überragt.

30. Bearbeitungszentrum nach einem oder mehreren der vorhergehenden Ansprüche, **dadurch gekennzeichnet, daß** das Portal (25) die Bearbeitungseinheit (1) oder den Anschluß an die Verkettungsvorrichtung (5) überragt.

31. Bearbeitungszentrum nach einem oder mehreren der vorhergehenden Ansprüche, **dadurch gekennzeichnet, daß** an dem Portal (25) die Arbeitsraumabdeckung des Bearbeitungszentrums (9) anschließt.

32. Bearbeitungszentrum nach einem oder mehreren der vorhergehenden Ansprüche, **dadurch gekennzeichnet, daß** die Spannvorrichtung (2) an einen verfahrbaren Fahrständer (20) vorgesehen ist.

33. Verfahren zum Bearbeiten eines oder mehrerer Werkstücke, insbesondere in einem Bearbeitungszentrum nach einem oder mehreren der vorhergehenden Ansprüche, wobei das Werkstück zunächst bezüglich einer ersten Werkzeugspindel einer ersten Bearbeitungseinheit positioniert wird und hernach oder gleichzeitig eine zweite Werkzeugspindel über eine zweite Bearbeitungseinheit an dem Werkstück positioniert wird.
